# FASCICULE DE BREVET EUROPEEN

(11) **EP 0 507 690 B1**
(45) Date de publication et mention de la délivrance du brevet: **05.07.1995**
(21) Numéro de dépôt: 92400931.9
(22) Date de dépôt: 03.04.1992
(51) Int. Cl.: E04H 1/12, B60S 5/02, B67D 5/64

(54) **Station de distribution transportable**
Transportable Tankstelle
Transportable filling station

(30) Priorité: 04.04.1991 FR 9104088
(43) Date de publication de la demande: 07.10.1992
(73) Titulaire: ELF ANTAR FRANCE, 92400 Courbevoie (FR)
(72) Inventeur: Vincent, Bruno, F-91130 Ris Orangis (FR)
(74) Mandataire: Boillot, Marc

(56) Documents cités:
- FR-A- 2 206 269
- US-A- 4 901 748

## Description

La présente invention est relative à une station transportable de distribution de produits pétroliers.

Les produits pétroliers doivent être acheminés depuis les raffineries de pétrole où ils sont élaborés jusqu'aux consommateurs. Certains tels que les fuels légers et lourd sont livrés par camions directement à l'utilisateur, d'autres tels que les essences sont distribués par l'intermédiaire de stations fixes mises à la disposition des utilisateurs à proximité des points de consommation c'est à dire le long des rues et des routes.

Les stations, dans leur grande majorité sont conçues comme des installations fixes nécessitant pour leur réalisation des infrastructures lourdes, en particulier en ce qui concerne les cuves de stockage qui sont toujours enfouies dans le sol. Elles nécessitent pour leur implantation une surface au sol élevée, des délais de réalisation importants et bien évidement des investissements conséquents.

Or il existe des cas où l'implantation d'une station service classique s'avére difficile ou sans réel intérêt. Il arrive fréquemment que des manifestations de durée limitée concentrent en un lieu géographique précis un nombre important de véhicules automobiles et créent donc pour un temps un besoin de point de distribution. Il arrive également que des travaux soit entrepris dans des stations empêchant la distribution pendant quelques mois et créant donc un besoin provisoire en produits. Il en sera de même sur un tronçon ouvert d'une autoroute en construction où un besoin apparaîtra tant que la totalité de l'ouvrage n'aura pas été mise en service. Dans d'autres cas le besoin de carburants peut être permanent mais les conditions d'environnement telles que l'implantation d'une station service classique s'avére pratiquement impossible. Cela est vrai en particulier dans les sites urbains où le sous-sol est encombré, le terrain peu disponible et cher ce qui rend l'implantation d'une station classique particulièrement onéreuse.

Le brevet US-A-4 901 748 décrit une station de produits pétroliers, comportant un bâtiment préfabriqué, muni des moyens et accessoires usuels pour le stockage et la distribution de carburants, avec une piste d'accès pour les véhicules à servir. Toutefois, cette station est fixe au sol et n'est pas transportable en l'état, un tel transport pour réimplanter la station en un autre lieu exigeant un démontage complet pratiquement impossible.

Le brevet FR-A-2206269 illustre un conteneur de carburant, pouvant être manipulé et déplacé, mais non pas une station service entièrement transportable en bloc, avec l'ensemble des moyens qu'elle comporte.

L'invention permet au contraire de réaliser cet objectif en toute sécurité, la manipulation et le transport de la station pouvant s'effectuer avec rapidité et efficacité.

La présente invention permet de résoudre le problème d'implantation de stations soit pour un temps limité, auquel cas la station pourra être réimplantée dans un autre lieu, soit pour un temps plus long, mais sans demander de grandes surfaces et sans nécessiter de gros travaux.

Elle consiste en une station de distribution de produit pétroliers, selon la revendication 1.

Le bâtiment préfabriqué renferme une cuve non enterrée comportant plusieurs compartiments indépendants. Chacun de ces compartiments peut être rempli de produits différents tels que essence ordinaire, super, essence sans plomb, gazole et d'une façon générale de tout produit pétrolier susceptible d'être distribué en station service. Autour de cette cuve est placé, toujours à l'intérieur du bâtiment préfabriqué, une bac de rétention des produits contenus dans la cuve, d'un volume utile au moins égal au volume des produits contenus dans ladite cuve. Le bâtiment renferme également les moyens de pompage aptes à assurer le transfert des produits entre les compartiments de la cuve et les véhicules automobiles venant se ravitailler.

Le bâtiment sera réalisé de façon à pouvoir être chargé sur la plate-forme d'un véhicule de transport sans aucun démontage étant entendu que la cuve de stockage des produits aura été préalablement vidée et dégazée.

Dans le bâtiment on trouvera également les moyens généralement disponibles dans les stations-service classiques tels qu'un local technique pour arrivée d'eau, d'électricité et de téléphone, un kiosque de paiement et de surveillance de la distribution, une gaine technique pour les appareils distributeurs et le réseau de sécurité.

On pourra y adjoindre un auvent pour la distribution, l'auvent en question pouvant être réalisé en toile tendue et pouvant être replié lors du transport de la station.

D'autres caractéristiques et avantages de la présente invention ressortiront de la description qui va suivre, faite en regard des dessins annexés, et donnant à titre explicatif, mais nullement limitatif, une forme de réal isation de l'invention.

Sur ces dessins :
- la figure 1 représente une vue en perspective de l'invention,
- la figure 2 représente une vue de dessus de la station, le bâtiment étant coupé à sa partie supérieure,
- la figure 3 représente une vue latérale en coupe de la station,
- la figure 4 représente une vue de face de la station, la face avant du bâtiment ayant été partiellement retirée,

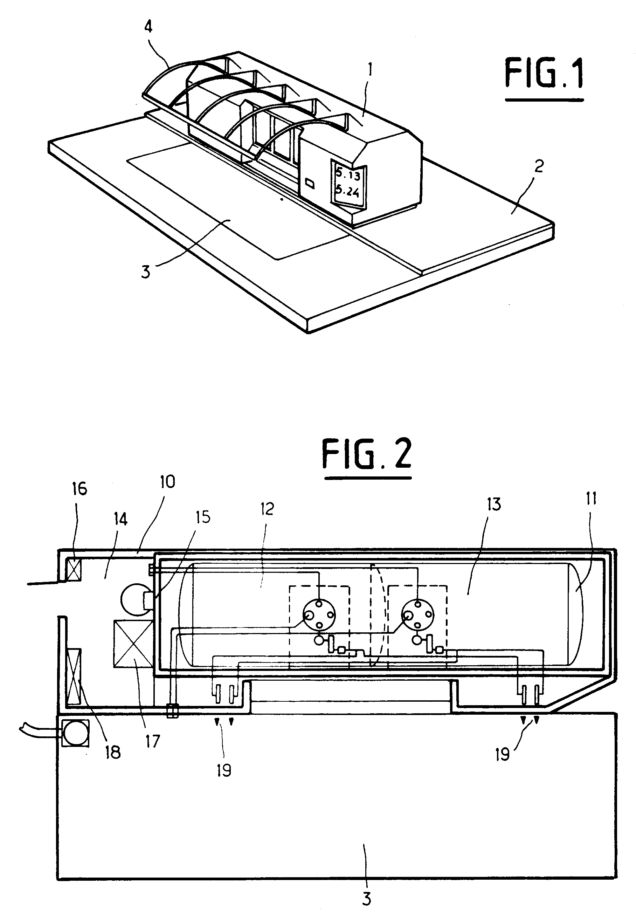

La figure 1 montre, en vue perspective, les éléments essentiels de l'invention. Sur un socle (2), solidaire du terrain, constitué d'une dalle en béton dont le rôle est d'assurer aussi bien la planéité de l'aire sur laquelle repose la station que la résistance mécanique nécessaire au supportage des éléments transportables reposent lesdits éléments, à savoir un bâtiment préfabriqué (1) et une piste (3) sur laquelle roulent et stationnent les véhicules venant se ravitailler en carburant. Un auvent (4) fixé au bâtiment (1) recouvre partiellement ladite piste.

Sur la figure 2 le toit du bâtiment (1) a été enlevé permettant ainsi d'en apprécier l'organisation. A l'intérieur de l'enceinte constituée par les murs (10) se trouve placée une cuve (11) destinée à contenir les hydrocarbures distribués par la station. Cette cuve peut comporter un ou plusieurs compartiments séparés et remplis de produits différents. Dans l'exemple de réalisation représenté sur la figure 2, ladite cuve est divisée en deux compartiments (12) et (13) d'égale contenance. La capacité de chacun des compartiments dépend des besoins en un produit donné, les dimensions totales de la cuve (11) n'étant limitées que par la taille du bâtiment (1) qui doit rester transportable par des moyens routiers. Cette capacité est comprise entre 2000 et 30000 litres, préférentiellement entre 5000 et 20000 litres sans que ces chiffres constituent des limites absolues. Afin d'améliorer la sécurité de l'installation, la cuve (11) pourra être du type à double enveloppe.

De façon préférée, la cuve est placée à une extrémité du bâtiment de façon à dégager l'autre extrémité du bâtiment, y ménageant ainsi un espace (14) qui servira de local technique et de kiosque de paiement.

Autour de la cuve contenant les hydrocarbures est ménagée une cuvette de rétention (15) dont la capacité est au moins égale à celle de la cuve (11). Ladite cuvette est réalisée étanche et de façon à ce que, au cas où la cuve contenant les hydrocarbures viendrait à perdre accidentellement ses produits, la totalité de ceux-ci soit retenus à l'intérieur assurant ainsi la sécurité des personnes et des matériels.

Afin d'éviter en cas d'incendie une destruction trop rapide de cette cuvette de rétention, les cloisons la constituant seront réalisées en matériaux assurant une fonction coupe feu pendant un temps conforme aux réglements en vigueur.

L'espace (14) sera aménagé de façon à pouvoir assurer les deux fonctions de local technique et de kiosque de paiement. Il contiendra donc un ou plusieurs coffrets (16) aptes à recevoir les arrivées d'eau, d'électricité et de téléphone. L'aménagement et les cloisonnements du ou des coffrets (16) sera réalisé de façon à satisfaire les conditions imposées par les distributeurs de ces utilités.

On trouvera également dans le local une armoire (17) contenant une réserve de produit d'extinction en liaison avec un dispositif automatique d'extinction, une armoire (18) dans laquelle seront regroupés les départs, commandes et automatismes électriques.

La place restant disponible en (14) sera occupée par un bureau comportant un pupitre et un calculateur assurant le regroupement des fonctions nécessaires à surveiller la distribution et assurer la sécurité de la station transportable.

Des pistolets de distribution (19) des carburants contenus dans la cuve (11) sont placés à l'extérieur du bâtiment (1). Ils sont répartis en plusieurs batteries correspondant chacune à un emplacement de véhicule. Le nombre d'emplacement peut être déterminé facilement par l'homme du métier sachant qu'il dépend de la longueur du bâtiment (1), ladite longueur étant elle même fonction des possibilités des moyens devant assurer le transport du bâtiment.

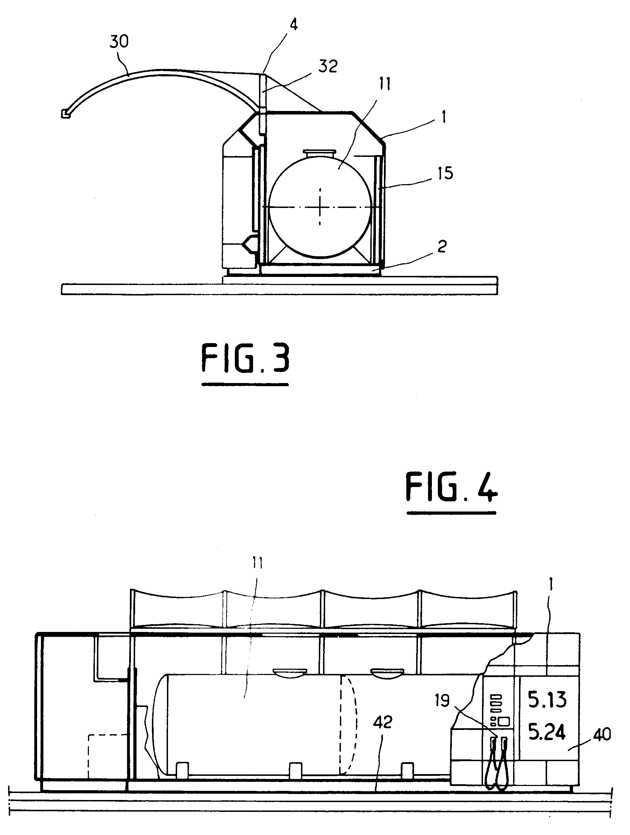

Sur la figure 3 le bâtiment (1) est représenté en coupe au niveau de la cuve (11). L'auvent (4) est réalisé de façon amovible au moyen d'arceaux (30) fixés au bâtiment (1) par l'intermédiaire de potences ((32). Ces arceaux sont réunis entre eux par des éléments de couverture en toile type toile de bâche, en plastique armé, en tôle d'acier ou d'aluminium ou en toute autre matière connue de l'homme du métier et pouvant assurer cette fonction tant du point de vue de l'étanchéité que du point de vue de la résistance mécanique.

La figure 4 met en évidence la face avant de la station correspondant à une forme de réalisation de l'invention. A coté des pistolets de distribution (19) se trouve un espace disponible (40) pouvant recevoir des panneaux portant mention des prix ou des affiches publicitaires. L'enlèvement partiel de la face avant du bâtiment (1) montre l'implantation de la cuve multiple (11). L'ensemble du bâtiment (1) devant être transportable, il importe de réaliser le plancher (42) du bâtiment (1) de façon à pouvoir lever ledit bâtiment. Ce plancher (42) sera réalisé en profilés métalliques dont le nombre et le section seront déterminés par les dimensions et le poids de l'ensemble ainsi que par les positions relatives des organes de levage. Si pour des raisons de capacité de transport ou d'encombrement global du bâtiment (1) il est impossible d'assurer le déplacement en un seul colis, une variante de la présente invention consistera à réaliser ledit bâtiment en plusieurs sous-ensembles pouvant être transportés séparément et réassemblés sur place. Chacun des sous-ensembles pourra comporter une cuve de stockage.

La disposition hors sol des cuves de stockage du produit à distribuer n'avait jamais été réalisée jusqu'à présent compte tenu des risques que l'on croyait rédhibitoires. L'invention objet du présent brevet élimine tout danger en installant, outre le bac de rétention et les cloisons coupe-feu, les dispositifs suivants, connus en eux-même.

A l'intérieur du bâtiment (1)
- des sondes de détection permanente de la présence d'hydrocarbures,
- un dispositif d'extraction de vapeurs et de récupération des dites vapeurs,
- un système de protection automatique d'incendie,

Sur les postes de distribution
- un limiteur de remplissage,
- un dispositif anti-arrachement des flexibles

En outre, on prévoie l'installation d'un réseau de télésurveillance permanente depuis le centre d'exploitation des stations de distribution ainsi qu'en plusieurs points de la station des boutons poussoir d'arrêt d'urgence permettant la mise en sécurité de tous les équipements la composant. D'autres dispositifs de sécurité connus de l'homme du métier pourront être installés afin de rendre la station conforme aux normes et réglements en vigueur dans le pays concerné.

Ainsi en France, la station sera réalisée conformément, entre autres,
- à la loi 76.663 du 19 Juillet 1976,
- aux décrets 77.1134 et 771133 du 21 Septembre 1977,
- aux arrêtés n° 253 et 261 bis.

## Revendications

1. Station de distribution de produits pétroliers, comportant un bâtiment préfabriqué (1), à usage de stockage de carburants à l'intérieur d'une cuve (11), de kiosque de paiement et de local technique et de sécurité, des moyens (19) pour délivrer ces carburants et une piste de circulation pour véhicules (3), démontable, caractérisée en ce que le plancher (42) du bâtiment est réalisé au moyen de profilés métalliques permettant le levage en bloc de ce bâtiment avec la cuve, sans déformations permanentes, pour son transport et sa mise en place temporaire dans un emplacement donné, la cuve étant disposée à l'intérieur d'une cuvette (15), dont la capacité est au moins égale à celle de la cuve, pour permettre la rétention de la totalité des carburants contenues dans celle-ci, en cas de fuite accidentelle.

2. Station selon la revendication 1 caractérisée en ce que le bâtiment préfabriqué renferme une cuve à plusieurs compartiments pouvant être remplis de carburants différents.

3. Station selon l'une des revendications 1 ou 2 caractérisée en ce que le bâtiment préfabriqué est équipé d'un auvent incorporé au bâtiment.

4. Station selon la revendication 3 caractérisée en ce que l'auvent est réalisé en toile tendue repliable.

5. Station selon l'une quelconque des revendications 1 à 4 caractérisée en ce que le local technique comporte des coffrets (16) d'arrivée d'eau, d'électricité et de téléphone.

## Claims

1. Station for dispensing petroleum products, comprising a prefabricated building (1), for use for storing fuels inside a tank (11), as a pay kiosk and as technical and security premises, means (19) for dispensing those fuels and a path for the movement of vehicles (3), which can be dismantled, characterised in that the floor (42) of the building is made of metal sections permitting the lifting en bloc of the building with the tank, without permanent deformation, so that it can be transported and placed temporarily at a given site, the tank being arranged inside a container (15), the capacity of which is at least equal to that of the tank, in order to permit all of the fuels contained in the latter to be retained in case of accidental leakage.

2. Station according to Claim 1, characterised in that the prefabricated building contains a tank having several compartments that can be filled with different fuels.

3. Station according to either Claim 1 or Claim 2, characterised in that the prefabricated building is equipped with a canopy incorporated in the building.

4. Station according to Claim 3, characterised in that the canopy is made of foldable stretched canvas.

5. Station according to any one of Claims 1 to 4, characterised in that the technical premises comprise water supply, electricity and telephone modules.

## Patentansprüche

1. Abgabestelle für Mineralölerzeugnisse mit
- einem vorgefertigten Gebäude (1), welches zur Lagerung von Kraftstoffen im Inneren eines Tanks (11), als Kassenhäuschen und als technischer Raum und Sicherheitsraum verwendet wird,
- Einrichtungen (19) zur Ausgabe der Kraftstoffe und
- einer demontierbaren Kraftfahrzeugverkehrsspur (3)
dadurch gekennzeichnet, daß
- der Boden (42) des Gebäudes aus metallischen Profilteilen ausgeführt ist, die das Heben dieses Gebäudes als Ganzes mit dem Tank ohne dauerhafte Verformungen für seinen Transport und sein zeitweiliges Positionieren an einem gegebenen Ort ermöglichen,
- wobei der Tank im Inneren eines Behälters (15) angeordnet ist, dessen Fassungsvermögen zumindest gleich groß wie das des Tanks ist, um das Zurückhalten der gesamten in diesem enthaltenen Kraftstoffe im Falle einer unfallsbedingten Leckage zu ermöglichen.

2. Abgabestelle nach Anspruch 1, dadurch gekennzeichnet, daß das vorgefertigte Gebäude einen Tank mit mehreren Abteilungen einschließt, die mit verschiedenen Kraftstoffen gefüllt werden können.

3. Abgabestelle nach einem der Ansprüche 1 oder 2, dadurch gekennzeichnet, daß das vorgefertigte Gebäude mit einem in das Gebäude eingebauten Vordach ausgestattet ist.

4. Abgabestelle nach Anspruch 3, dadurch gekennzeichnet, daß das Vordach aus zusammenfaltbarem gespannten Tuch besteht.

5. Abgabestelle nach einem der Ansprüche 1 bis 4, dadurch gekennzeichnet, daß der technische Raum Kästen (16) für den Wasser-, Elektrizitäts- und Telefonanschluß enthält.
